# EUROPÄISCHE PATENTSCHRIFT

(11) **EP 4 100 285 B1**
(45) Veröffentlichungstag und Bekanntmachung des Hinweises auf die Patenterteilung: **24.04.2024**
(21) Anmeldenummer: 21701232.7
(22) Anmeldetag: 11.01.2021
(51) Int. Cl.: B60R 22/195

(54) **STRAFFVORRICHTUNG FÜR EINE SICHERHEITSGURTKOMPONENTE**
TENSIONING DEVICE FOR A SEAT BELT COMPONENT
DISPOSITIF TENDEUR POUR ÉLÉMENT DE CEINTURE DE SÉCURITÉ

(30) Priorität: 07.02.2020 DE 102020103157
(43) Veröffentlichungstag der Anmeldung: 14.12.2022
(73) Patentinhaber: Autoliv Development AB, 447 83 Vårgårda (SE)
(72) Erfinder: LEGDE, Dietmar, 22457 Hamburg (DE)
(74) Vertreter: Feucker, Max Martin
(86) Internationale Anmeldenummer: PCT/EP2021/050359
(87) Internationale Veröffentlichungsnummer: WO 2021/156015

(56) Entgegenhaltungen:
- EP-A1- 1 737 711
- EP-A2- 0 186 880
- DE-A1- 10 250 499
- DE-A1- 10 356 878
- DE-B4-102015 111 083
- DE-B4-102015 111 083
- DE-C2- 19 882 814
- DE-U1- 29 708 880
- US-A- 5 364 129

## Beschreibung

Die vorliegende Erfindung betrifft einen Straffvorrichtung für eine Sicherheitsgurtkomponente, mit einem Gasgenerator zur Erzeugung eines Druckgases, einem von dem Druckgas antreibbaren Kolben, einem an den Kolben angeschlossenen Zugseil, welches mit einer in eine Straffbewegung zu versetzenden Sicherheitsgurtkomponente verbindbar ist, einem den Kolben aufnehmenden und führenden Strafferrohr und einem eine Seilführung ausbildenden Führungsblock, in dem eine den Gasgenerator aufnehmende Aufnahme und eine mit der Aufnahme strömumgstechnisch verbundene Druckkammer ausgebildet ist, wobei der Führungsblock mit dem Strafferrohr verbunden ist und das Zugseil geradlinig in einer Kolbenbewegungsrichtung aus dem Strafferrohr durch die Druckkammer verläuft.

Eine solche Straffvorrichtung ist beispielsweise aus DE 10 2015 111 083 B4 bekannt, bei der der Führungsblock eine Seilumlenkung ausbildet, so dass das aus der Druckkammer in Richtung der zu straffenden Sicherheitsgurtkomponente von einer Umlenkungsführung in dem Führungsblock quer zu der Kolbenbewegungsrichtung umgelenkt wird. Eine solche Umlenkung des Zugseiles durch den Führungsblock war bisher erforderlich, da die Straffvorrichtung seitlich neben einem Fahrzeugsitz montiert wird und die Kolbenbewegungsrichtung parallel zur Längsachse des Fahrzeuges ausgerichtet ist, wobei über das Zugseil in der Regel ein Gurtschloss oder ein Endbeschlag eines Sicherheitsgurtes gestrafft wird. Es hat sich nun der Bedarf entwickelt, dass die Straffvorrichtung auch in anderer Ausrichtung im Kraftfahrzeug montiert wird. Eine Straffvorrichtung mit den Merkmalen des Oberbegriffs des Anspruchs 1 ist aus US 5,364,129 bekannt. Weitere Straffvorrichtung sind aus DE 297 08 880 U1, DE 102 50 499 A1 und EP 1 737 711 A1 bekannt.

Aufgabe der vorliegenden Erfindung ist es daher, eine Straffvorrichtung bereitzustellen, die mit einer anderen Ausrichtung im Kraftfahrzeug montiert werden kann und/oder die eine höhere Flexibilität bei der Konfiguration der Straffvorrichtung ermöglicht.

Gelöst wird die Aufgabe durch eine Straffvorrichtung mit den Merkmalen des unabhängigen Anspruchs. Vorteilhafte Weiterbildungen der Straffvorrichtung sind in den abhängigen Ansprüchen und in der Beschreibung angegeben, wobei einzelne Merkmale der vorteilhaften Weiterbildungen in technisch sinnvoller Weise miteinander kombinierbar sind.

Gelöst wird die Aufgabe insbesondere durch eine Straffvorrichtung mit den eingangs genannten Merkmalen, bei der der Führungsblock eine sich an die Druckkammer anschließende Linearführung ausbildet, die derart gestaltet ist, dass das Zugseil parallel zu der Kolbenbewegungsrichtung auf der dem Strafferrohr gegenüberliegenden Seite aus dem Führungsblock herausführbar ist.

Die Erfindung sieht in ihrem Grundgedanken also vor, dass der einteilige Führungsblock derart ausgebildet ist, dass das Zugseil parallel fluchtend oder parallel versetzt zu der Kolbenbewegungsrichtung aus dem Führungsblock heraustritt, so dass das die Kolbenbewegungsrichtung vorgebende Strafferrohr parallel oder parallel versetzt zu der Straffbewegung der Sicherheitsgurtkomponente ausgerichtet werden kann. Alternativ ist es möglich, dass eine Umlenkung des Zugseiles außerhalb des Führungsblockes mit weiteren Mitteln erfolgt. Somit kann die Straffvorrichtung also an anderen Orten als bisher üblich im Kraftfahrzeug platziert werden.

Um zu verhindern, dass das Zugseil nach dem Zusammenbau der Straffvorrichtung und vor oder auch nach der Montage der Straffvorrichtung im Kraftfahrzeug unbeabsichtigt bewegt wird und somit auch der Kolben im Strafferrohr eine nicht gewünschte Stellung einnimmt, ist erfindungsgemäß vorgesehen, dass die Linearführung mindestens ein Widerstandselement aufweist, welches insbesondere in der Linearführung angeordnet ist, wobei das Widerstandselement einer unbeabsichtigten Bewegung des Zugseiles entgegenwirkt. Es ist vorgesehen, dass in dem Führungsblock außerhalb der Druckkammer in die Linearführung vorspringende Vorsprünge oder Verengungen ausgebildet sind, die eine Relativbewegung des Zugseiles und damit des Kolbens relativ zum Strafferrohr vor der Montage oder auch nach der Montage im Kraftfahrzeug verhindern.

Prinzipiell ist es möglich, dass das Widerstandselement einteilig an dem Führungsblock ausgebildet ist. Bevorzugt ist jedoch, dass das Widerstandselement als eigenständiges Bauteil ausgebildet ist und in die durch den Führungsblock ausgebildete Linearführung eingesetzt ist. Das eigenständige Bauteil ist dabei aus einem anderen Material gefertigt als der Führungsblock.

Das eingesetzte Bauteil ist bevorzugt aus einem Kunststoff ausgebildet, wobei das von dem Bauteil ausgebildete mindestens eine Widerstandselemente am Anfang eines Straffvorganges aufgrund der Reibung zwischen dem Zugseil und dem mindestens einen Widerstandselement reduziert werden. Beispielsweise können an dem aus Kunststoff gebildeten Bauteil zunächst mit dem Zugseil in Anlage befindliche Vorsprünge ausgebildet sein, die eine unbeabsichtigte Bewegung des Zugseiles verhindern, am Anfang des Straffvorgangs aufgrund der Reibung mit dem Zugseil aber in ihrer Höhe reduziert werden, so dass sich deren Widerstand verringert. Ein solches eigenständiges Bauteil ist insbesondere dann sinnvoll, wenn das Zugseil parallel fluchtend zu der Kolbenbewegungsrichtung aus dem Führungsblock herausgeführt ist.

Ein weiteres Widerstandselement kann aber auch dadurch gebildet werden, dass eine Schikane für das Zugseil durch den Führungsblock selbst oder durch ein in den Führungsblock eingesetztes Bauteil erzeugt wird. Insbesondere kann das Widerstandselement durch den Führungsblock bzw. dessen Linearführung eine S-förmige Führung für das Zugseil ausbilden, sodass das Zugseil mit einem parallelen Versatz zu der Kolbenbewegungsrichtung aus dem Führungsblock austritt.

Damit der Führungsblock nicht nur für eine neuartige Anordnung der Straffvorrichtung eingesetzt werden kann, sondern auch in bereits bekannten Straffvorrichtungen als Führungsblock verwendet werden kann, kann vorgesehen sein, dass zusätzlich zu der Linearführung eine Umlenkungsführung in dem Führungsblock ausgebildet ist, die derart gestaltet ist, dass das Zugseil schräg zu der Kolbenbewegungsrichtung aus dem Führungsblock herausführbar ist. In dem Führungsblock ist also sowohl eine Linearführung als auch eine Umlenkungsführung ausgebildet, so dass der Führungsblock flexibel eingesetzt werden kann. Insbesondere kann der Führungsblock so ausgebildet sein, dass die Umlenkungsführung aus der Linearführung abzweigt und insbesondere eine Seilumlenkung von mehr als 20°, bevorzugt mehr als 45° und besonders bevorzugt von mehr als 90° ermöglicht.

Wenn das Widerstandselement an einem eigenständigen Bauteil ausgebildet ist, kann vorgesehen sein, dass das eigenständige Bauteil so geformt ist, dass es sowohl in der Linearführung als auch in der Umlenkungsführung angeordnet ist. Auf diese Weise wird auch zuverlässig eine Position des Bauteils in dem Führungsblock vorgegeben und eine Bewegung des eigenständigen Bauteils verhindert. Insbesondere ist das eigenständige Bauteil so ausgebildet, dass es sich mit dem die Widerstandselemente bildenden Abschnitt entlang der Linearführung erstreckt, während ein Halteabschnitt in die Umlenkungsführung eingreift.

Die Erfindung sowie das technische Umfeld werden im Folgenden anhand der Figuren beispielhaft erläutert. Es zeigen schematisch
- Figur 1:: eine Straffvorrichtung,
- Figur 2:: ein eigenständiges Bauteil zur Ausbildung eines Widerstandselements der Straffvorrichtung gemäß Figur 1 und
- Figur 3:: eine schematische Darstellung einer weiteren Ausführungsform einer Straffvorrichtung.

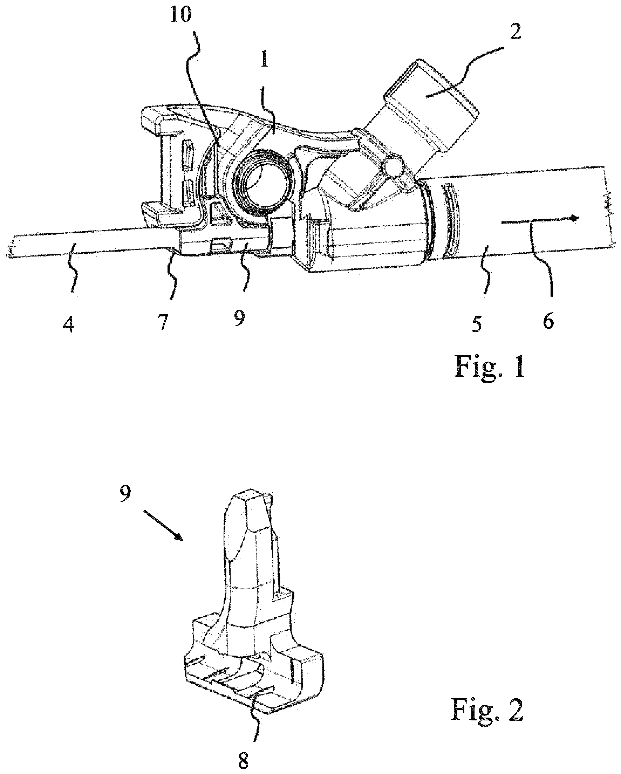

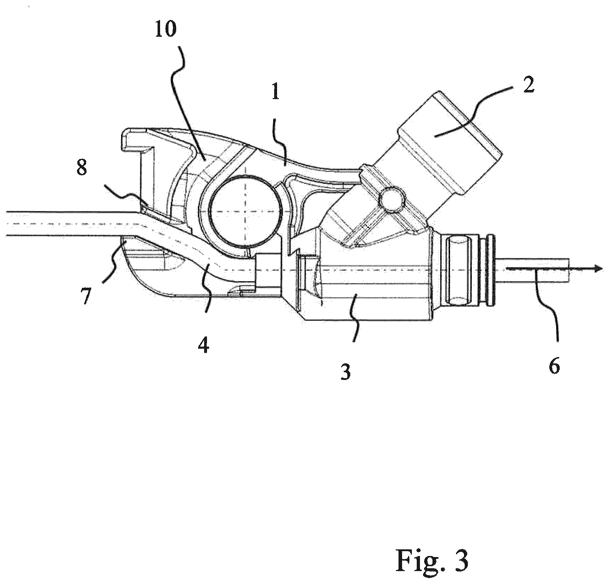

Die in den Figuren 1 und 3 dargestellten Straffvorrichtungen umfassen jeweils einen Führungsblock 1, in dem eine Aufnahme 2 für einen nicht dargestellten Gasgenerator ausgebildet ist. Die Aufnahme 2 ist strömungstechnisch mit einer in dem Führungsblock 1 ausgebildeten Druckkammer 3 verbunden.

Ein Zugseil 4 ist geradlinig durch die Druckkammer 3 und in ein Strafferrohr 5 geführt. Innerhalb des Strafferrohrs 5 ist das Zugseil 4 mit einem nicht dargestellten Kolben verbunden. Die Anordnung des Kolbens an dem Zugseil und in dem Strafferrohr ist bereits in der eingangs erwähnten DE 10 2015 111 083 B4 erwähnt, auf die diesbezüglich verwiesen wird. Auf die Anordnung des Kolbens kommt es für die vorliegende Erfindung aber auch nicht an.

Im Auslösefall wird von dem Gasgenerator ein Druckgas erzeugt, dass durch die Druckkammer 3 in das Strafferrohr 5 geleitet wird und dort den Kolben und somit auch das Zugseil 4 in eine Kolbenbewegungsrichtung 6 antreibt.

Auf der dem Strafferrohr 5 abgewandten Seite ist der Führungsblock 1 derart ausgebildet, dass das Zugseil 4 parallel fluchtend (Figur 1) beziehungsweise mit einem parallelen Versatz (Figur 3) aus dem Führungsblock 1 herausgeführt ist. Der Führungsblock 1 weist also eine Linearführung 7 auf. Zusätzlich weißt der Führungsblock 1 auch eine Umlenkungsführung 10 auf, so dass das Zugseil 4 auch quer zu der Kolbenbewegungsrichtung 6 aus dem Führungsblock 1 herausgeführt werden könnte (in den Figuren nicht dargestellt).

Um zu verhindern, dass das Zugseil 4 und damit der Kolben vor einem Straffvorgang unbeabsichtigt bewegt werden, ist ein Widerstandselement 8 vorgesehen.

Gemäß der Ausführungsform der Figuren 1 und 2 ist das Widerstandselement 8 durch Vorsprünge an einem eigenständigen Bauteil 9 ausgebildet. Das eigenständige Bauteil 9 ist so geformt, dass es mit einem Halteabschnitt in der Umlenkungsführung 10 angeordnet ist und mit dem das Widerstandselement 8 aufweisenden Abschnitt in der Linearführung 7. Am Anfang eines durch den Gasgenerator ausgelösten Straffvorgangs werden die Vorsprünge an dem einzelnen Bauteil 9 aufgrund der Reibung mit dem Zugseil 4 in ihrer Höhe reduziert, so dass auch die Reibung beziehungsweise der Widerstand abnimmt.

Gemäß der nicht unter den Anspruch 1 fallenden Ausführungsform der Figur 3 wird das Widerstandselement 8 durch eine Art Schikane ausgebildet, sodass das Zugseil 4 S-förmig umgelenkt wird, wodurch ein Widerstand gegeben ist.

### Bezugszeichenliste

- 1: Führungsblock
- 2: Aufnahme
- 3: Druckkammer
- 4: Zugseil
- 5: Strafferrohr
- 6: Kolbenbewegungsrichtung
- 7: Linearführung
- 8: Widerstandselement
- 9: Bauteil
- 10: Umlenkungsführung

## Patentansprüche

1. Straffvorrichtung für eine Sicherheitsgurtkomponente, mit
- einem Gasgenerator zur Erzeugung eines Druckgases,
- einem von dem Druckgas antreibbaren Kolben,
- einem an den Kolben angeschlossenen Zugseil (4), welches mit einer in eine Straffbewegung zu versetzenden Sicherheitsgurtkomponente verbindbar ist,
- einem Strafferrohr (5) zur Aufnahme und Führung des Kolbens und
- einem eine Seilführung ausbildenden Führungsblock (1), in dem eine den Gasgenerator aufnehmende Aufnahme (2) und eine mit der Aufnahme (2) strömungstechnisch verbundene Druckkammer (3) ausgebildet ist, wobei
der Führungsblock (1) mit dem Strafferrohr (5) verbunden ist und das Zugseil (4) geradlinig in einer Kolbenbewegungsrichtung (6) aus dem Strafferrohr (5) durch die Druckkammer (3) verläuft, wobei der Führungsblock (1) eine sich an die Druckkammer (3) anschließende Linearführung (7) ausbildet, die derart gestaltet ist, dass das Zugseil (4) parallel zu der Kolbenbewegungsrichtung (6) auf der dem Strafferrohr (5) gegenüberliegenden Seite aus dem Führungsblock (1) herausführbar ist, wobei in der Linearführung (7) mindestens ein Widerstandselement (8) angeordnet ist, welches einer unbeabsichtigten Bewegung des Zugseiles (4) entgegenwirkt, wobei in dem Führungsblock (1) außerhalb der Druckkammer (3) in die Linearführung (7) vorspringende Vorsprünge oder Verengungen ausgebildet sind, die eine Relativbewegung des Zugseiles (4) und damit des Kolbens relativ zum Strafferrohr (5) vor der Montage oder auch nach der Montage im Kraftfahrzeug verhindern, **dadurch gekennzeichnet, dass** die Vorsprünge oder Verengungen zunächst mit dem Zugseil (4) in Anlage sind und eine unbeabsichtigte Bewegung des Zugseiles (4) verhindern, wobei die Vorsprünge oder Verengungen am Anfang des Straffvorgangs aufgrund der Reibung mit dem Zugseil (4) in ihrer Höhe reduziert werden, so dass sich deren Widerstand verringert.

2. Straffvorrichtung nach Anspruch 1, wobei das wenigstens eine Widerstandselement (8) durch ein in die Linearführung (7) eingesetztes Bauteil (9) ausgebildet ist.

3. Straffvorrichtung nach Anspruch 2, wobei das eingesetzte Bauteil (9) aus Kunststoff ist und die von dem Bauteil (9) ausgebildeten Widerstandselemente (8) am Anfang eines Straffvorganges aufgrund der Reibung reduziert werden.

4. Straffvorrichtung nach einem der Ansprüche 1 bis 3, wobei das Widerstandselement (8) eine S-förmige Führung des Zugseiles (4) und damit einen parallelen Versatz des Zugseils (4) bedingt.

5. Straffvorrichtung nach einem der vorhergehenden Ansprüche, **dadurch gekennzeichnet, dass** zusätzlich zu der Linearführung (7) eine Umlenkungsführung (10) in dem Führungsblock (1) ausgebildet ist, die derart gestaltet ist, dass das Zugseil (4) schräg zu der Kolbenbewegungsrichtung (6) aus dem Führungsblock (1) heraus führbar ist.

6. Straffvorrichtung nach Anspruch 2 und 5, wobei das das Widerstandselement (8) ausbildende Bauteil (9) sowohl in der Linearführung (7) als auch in der Umlenkungsführung (10) angeordnet ist.

## Claims

1. Tensioning apparatus for a safety belt component, comprising
- an inflator for generating a pressurized gas,
- a piston that can be driven by the pressurized gas,
- a tension cable (4) that is connected to the piston, which cable can be connected to a seat belt component to be set into a tensioning movement,
- a tensioner tube (5) for receiving and guiding the piston, and
- a guide block (1) that forms a cable guide, in which block a receptacle (2) receiving the inflator and a pressure chamber (3) fluidically connected to the receptacle (2) are formed,
the guide block (1) being connected to the tensioner tube (5) and the tension cable (4) extending in a piston movement direction (6) in a straight line out of the tensioner tube (5) through the pressure chamber (3), the guide block (1) forming a linear guide (7) which adjoins the pressure chamber (3) and is designed such that the tension cable (4) can be guided out of the guide block (1) parallel to the piston movement direction (6) on the side opposite the tensioner tube (5), at least one resistance element (8) being arranged in the linear guide (7), which element counteracts an unintentional movement of the tension cable (4), projections or constrictions projecting into the linear guide (7) being formed in the guide block (1) outside the pressure chamber (3), which projections or constrictions prevent a relative movement of the tension cable (4) and therefore of the piston relative to the tensioner tube (5) before or even after mounting in the motor vehicle, **characterized in that** the projections or constrictions are initially in contact with the tension cable (4) and prevent an unintentional movement of the tension cable (4), the projections or constrictions being reduced in height at the beginning of the tensioning process due to friction with the tension cable (4), so that their resistance is reduced.

2. Tensioning apparatus according to claim 1, wherein the at least one resistance element (8) is formed by a component part (9) inserted into the linear guide (7).

3. Tensioning apparatus according to claim 2, wherein the inserted component part (9) is made of plastics material and the resistance elements (8) formed by the component part (9) are reduced at the beginning of a tensioning process due to friction.

4. Tensioning apparatus according to one of claims 1 to 3, wherein the resistance element (8) causes an S-shaped guiding of the tension cable (4) and thus a parallel offset of the tension cable (4).

5. Tensioning apparatus according to one of the preceding claims, **characterized in that,** in addition to the linear guide (7), a deflection guide (10) is formed in the guide block (1), which deflection guide is designed in such a way that the tension cable (4) can be guided out of the guide block (1) obliquely to the piston movement direction (6).

6. Tensioning apparatus according to claims 2 and 5, wherein the component part (9) forming the resistance element (8) is arranged both in the linear guide (7) and in the deflection guide (10).

## Revendications

1. Dispositif de tension pour un composant de ceinture de sécurité, comportant
- un générateur de gaz destiné à produire un gaz comprimé,
- un piston pouvant être entraîné par le gaz comprimé,
- un câble de traction (4) raccordé au piston, lequel câble de traction peut être relié à un composant de ceinture de sécurité à mettre en mouvement de tension,
- un tube de tendeur (5) destiné à recevoir et à guider le piston, et
- un bloc de guidage (1) formant un guide-câble, bloc de guidage dans lequel sont formés un logement (2) recevant le générateur de gaz et une chambre de pression (3) reliée fluidiquement au logement (2), dans lequel
le bloc de guidage (1) est relié au tube de tendeur (5) et le câble de traction (4) s'étend linéairement, à partir du tube de tendeur (5) en passant par la chambre de pression (3), dans une direction de mouvement de piston (6), dans lequel le bloc de guidage (1) forme un guide linéaire (7) adjacent à la chambre de pression (3), lequel guide linéaire est conçu de telle sorte que le câble de traction (4) peut être guidé vers l'extérieur sur le côté opposé au tube de tendeur (5) à partir du bloc de guidage (1), parallèlement à la direction de mouvement de piston (6), dans lequel, dans le guide linéaire (7), il est disposé au moins un élément de résistance (8) qui contre un mouvement non contrôlé du câble de traction (4), dans lequel, dans le bloc de guidage (1) à l'extérieur de la chambre de pression (3), des saillies ou des rétrécissements proéminent(e)s sont formé(e)s dans le guide linéaire (7), lesquels rétrécissements ou saillies empêchent un mouvement relatif du câble de traction (4), et donc du piston par rapport au tube de tendeur (5) avant le montage et même après le montage dans le véhicule automobile, **caractérisé en ce que** les saillies ou les rétrécissements sont d'abord en contact avec le câble de traction (4) et empêchent un mouvement non contrôlé du câble de traction (4), dans lequel, en raison du frottement avec le câble de traction (4), les saillies ou les rétrécissements sont réduits en hauteur au début du processus de tension, de sorte que leur résistance diminue.

2. Dispositif de tension selon la revendication 1, dans lequel l'au moins un élément de résistance (8) est formé par une pièce (9) insérée dans le guide linéaire (7).

3. Dispositif de tension selon la revendication 2, dans lequel la pièce (9) insérée est en matière plastique et les éléments de résistance (8) formés par la pièce (9) sont réduits au début du processus de tension, en raison du frottement.

4. Dispositif de tension selon l'une des revendications 1 à 3, dans lequel l'élément de résistance (8) suppose un guidage en S du câble de traction (4), et donc un décalage parallèle du câble de traction (4).

5. Dispositif de tension selon l'une des revendications précédentes, **caractérisé en ce que,** outre le guide linéaire (7), il est formé un guide de renvoi (10) dans le bloc de guidage (1), lequel guide de renvoi est conçu de telle sorte que le câble de traction (4) peut être guidé vers l'extérieur à partir du bloc de guidage (1), en oblique par rapport à la direction de mouvement de piston (6).

6. Dispositif de tension selon les revendications 2 et 5, dans lequel la pièce (9) formant l'élément de résistance (8) est disposée aussi bien dans le guide linéaire (7) que dans le guide de renvoi (10).
